# EUROPÄISCHE PATENTSCHRIFT

(11) **EP 3 956 561 B1**
(45) Veröffentlichungstag und Bekanntmachung des Hinweises auf die Patenterteilung: **05.06.2024**
(21) Anmeldenummer: 20719373.1
(22) Anmeldetag: 08.04.2020
(51) Int. Cl.: F03D 13/20

(54) **TURMSEGMENT UND VERFAHREN ZUM AUFBAU EINES TURMS**
TOWER SEGMENT AND METHOD FOR CONSTRUCTING A TOWER
SECTION DE TOUR ET PROCÉDÉ POUR LA CONSTRUCTION D'UNE TOUR

(30) Priorität: 15.04.2019 DE 102019109904
(43) Veröffentlichungstag der Anmeldung: 23.02.2022
(73) Patentinhaber: Wobben Properties GmbH, 26607 Aurich (DE)
(72) Erfinder: OHMS, Dieter, 39114 Magdeburg (DE); LONGERU, Markus, 21684 Stade (DE); TELLENSKY, Bernd, 06369 Görzig (DE)
(74) Vertreter: Eisenführ Speiser
(86) Internationale Anmeldenummer: PCT/EP2020/060083
(87) Internationale Veröffentlichungsnummer: WO 2020/212237

(56) Entgegenhaltungen:
- EP-A1- 2 888 474
- EP-A1- 3 132 138
- EP-A2- 2 635 489
- US-A1- 2014 069 046
- US-A1- 2014 133 921

## Beschreibung

Die Erfindung betrifft ein Turmsegment, insbesondere für einen Turm einer Windenergieanlage, einen Turm, insbesondere einen Turm einer Windenergieanlage, eine Windenergieanlage und ein Verfahren zum Aufbau eines Turms.

Windenergieanlagen sind grundsätzlich bekannt. Moderne Windenergieanlagen betreffen in der Regel sogenannte Horizontalachsen-Windenergieanlagen, bei denen die Rotorachse im Wesentlichen horizontal angeordnet ist und die Rotorblätter eine im Wesentlichen senkrechte Rotorfläche überstreichen. Windenergieanlagen umfassen neben einem an einer Gondel angeordneten Rotor in der Regel einen Turm, auf dem die Gondel mit dem Rotor um eine im Wesentlichen vertikal ausgerichtete Achse drehbar angeordnet ist. Der Rotor umfasst in der Regel drei gleich lange Rotorblätter.

Türme sind in der Regel schlanke Bauwerke mit einer großen Höhe, die insbesondere orthogonal zu dieser Höhe eine vergleichsweise geringe Erstreckung aufweisen. Türme werden häufig aus Beton und/oder aus Stahl hergestellt. Die Bandbreite von Turmausführungen reicht von Gitterkonstruktionen über Stahlrohrtürme mit oder ohne Seilabspannung bis hin zu Betonbauten.

Stahlrohrtürme mit großen Abmessungen werden in der Regel aus mehreren Bauteilen, insbesondere Turmsegmenten, hergestellt. Ein solcher Turm wird auch als segmentierter Turm bezeichnet. Segmentierte Türme können entlang ihrer Längserstreckung segmentiert sein. Derartige Segmente weisen häufig ringförmige Geometrien auf. Die Türme können darüber hinaus in horizontaler Richtung segmentiert sein, sodass der Turm auf einer Höhe aus mehreren nebeneinander angeordneten Segmenten besteht.

Türme können zylindrische und/oder konische Abschnitte, insbesondere entlang ihrer Längserstreckung, aufweisen, wobei Türme oftmals zylindrische und konische Abschnitte umfassen.

Türme von Windenergieanlagen, insbesondere von modernen Horizontalachsen-Windenergieanlagen, tragen zu einem erheblichen Teil zu den Gesamtkosten der Herstellung einer Windenergieanlage bei. Insbesondere die größer werdenden Rotordurchmesser und Leistungen von Windenergieanlagen führen dazu, dass auch die Türme größer werden und höheren Belastungen ausgesetzt sind. Die Türme werden einerseits hinsichtlich ihrer Höhe größer und andererseits in Bezug auf ihren Durchmesser.

Darüber hinaus ist die Montage von segmentierten Türmen an einem Aufstellort der Windenergieanlage aufwendig. Insbesondere die horizontal benachbarten Segmente erfordern einen hohen Zeitaufwand. Darüber hinaus ist bei der Logistik der Türme bzw. der Turmsegmente zu beachten, dass ein definierter Durchmesser bzw. eine definierte Höhe der Bauteile nicht überschritten wird, da beispielsweise an Brücken eine Durchfahrtsbeschränkung herrscht. Eine solche Durchfahrtsbeschränkung herrscht beispielsweise in Deutschland bei in der Regel 4,35 m. Darüber hinaus können bei in horizontaler Richtung segmentierten Türmen regelmäßig Verzüge festgestellt werden, die die Montage des Turms erschweren.

Im Stand der Technik bestehen verschiedene Ansätze zur Reduktion der Kosten und zur Erhöhung der Qualität von Windenergieanlagen-Türmen. Beispielsweise wird in der DE 10 2011 077 428 A1 ein Windenergieanlagen-Turm mit einer Mehrzahl von Turmsegmenten beschrieben, wobei die Turmsegmente an horizontalen und vertikalen Flanschen aneinanderstoßen und hier miteinander befestigt sind. Die DE 10 2004 017 006 A1 und die DE 10 2010 039 316 A1 beschreiben jeweils Lösungen zur Befestigung eines Turms an einem Fundament. Die existierenden Systeme und Verfahren zum Aufbau und zur Fertigung von Windenergieanlagen-Türmen bieten verschiedene Vorteile, jedoch sind weitere Verbesserungen wünschenswert.

Das Deutsche Patent-und Markenamt hat in der Prioritätsanmeldung zur vorliegenden Anmeldung folgenden Stand der Technik recherchiert: DE 10 2013 109 765 A1, DE 10 2015 014 070 A1, EP 2 636 899 A1.

Es ist daher eine Aufgabe der vorliegenden Erfindung, ein Turmsegment, insbesondere für einen Turm einer Windenergieanlage, einen Turm, insbesondere einen Turm einer Windenergieanlage, eine Windenergieanlage und ein Verfahren zum Aufbau eines Turms bereitzustellen, welche einen oder mehrere der genannten Nachteile vermindern oder beseitigen. Insbesondere ist es eine Aufgabe der Erfindung, eine Lösung bereitzustellen, die eine vereinfachte Logistik eines Turms ermöglicht.

Gemäß einem ersten Aspekt wird die Aufgabe gelöst durch ein Turmsegment für einen Turm einer Windenergieanlage, zur Anbindung an eine Trägerstruktur, insbesondere an ein Fundament, umfassend ein Turmfußelement mit einem oberen Ende und einem unteren Ende, und einer am unteren Ende angeordneten Gewindeöffnung, einen am unteren Ende angeordneten Flansch mit einer ersten Flanschöffnung und einer zweiten Flanschöffnung, wobei das Turmfußelement und der Flansch mit einem in der Gewindeöffnung und der ersten Flanschöffnung angeordneten Befestigungselement verbunden sind, und wobei die zweite Flanschöffnung derart ausgebildet ist, dass sich ein Verbindungselement der Trägerstruktur durch die zweite Flanschöffnung hindurch erstrecken kann, und ein am Flansch angeordnetes Lastelement mit einer ersten Lastelementöffnung umfasst, wobei das Befestigungselement teilweise innerhalb der ersten Lastelementöffnung angeordnet ist.

Das Turmfußelement erstreckt sich vorzugsweise mit einer Längserstreckung von dem oberen Ende hin zu dem unteren Ende. Das untere Ende ist im Betriebszustand der Trägerstruktur, insbesondere einem Fundament, zugewandt. Das obere Ende ist im Betriebszustand vorzugsweise der Trägerstruktur abgewandt und beispielsweise einer Gondel zugewandt. Orthogonal zur Längserstreckung und im Betrieb in horizontaler Richtung erstreckt sich das Turmfußelement vorzugsweise in einer radialen Richtung. Das Turmfußelement kann beispielsweise rohrförmig ausgebildet sein. Insbesondere kann das Turmfußelement am oberen und am unteren Ende eine Stirnseite aufweisen und entlang der Längserstreckung eine Außen- und eine Innenumfangsfläche. Zwischen der Außen- und Innenumfangsfläche, also insbesondere in radialer Richtung weist das Turmfußelement eine Dicke auf. Die Dicke kann auch einer Materialstärke entsprechen.

Das Turmfußelement umfasst vorzugsweise Stahl oder besteht aus Stahl. Darüber hinaus kann das Turmfußelement auch andere Werkstoffe umfassen oder aus diesen bestehen. Das Turmfußelement kann beispielsweise als Blechschuss oder als Schmiedeteil ausgebildet sein.

Am unteren Ende des Turmfußelements ist die Gewindeöffnung angeordnet. Die Gewindeöffnung kann beispielsweise ein Sackloch sein, das einen kreisrunden Querschnitt aufweist. Darüber hinaus ist es bevorzugt, dass die Gewindeöffnung ein Gewinde aufweist. Vorzugsweise weist die Gewindeöffnung eine Öffnungslängsachse auf, die ferner vorzugsweise parallel zur Längserstreckung zwischen dem oberen Ende und dem unteren Ende des Turmfußelements ausgerichtet ist.

Am unteren Ende des Turmfußelements ist der Flansch angeordnet. Der Flansch weist eine erste Flanschöffnung und eine zweite Flanschöffnung auf. In der ersten Flanschöffnung des Flansches und der Gewindeöffnung des Turmfußelements ist das Befestigungselement angeordnet, mit dem das Turmfußelement und der Flansch miteinander verbunden sind. Die erste Flanschöffnung und die Gewindeöffnung weisen vorzugsweise jeweils eine Längsachse auf, wobei diese Längsachsen ferner vorzugsweise koaxial ausgerichtet sind. Die erste Flanschöffnung ist vorzugsweise als Durchgangsöffnung ausgebildet. Der Flansch kann darüber hinaus plattenförmig ausgebildet sein. Der Flansch umfasst vorzugsweise Stahl oder besteht aus Stahl. Ferner kann der Flansch auch andere Materialien umfassen oder aus diesen bestehen.

Die zweite Flanschöffnung des Flansches ist ferner derart ausgebildet, dass sich das Verbindungselement der Trägerstruktur durch die zweite Flanschöffnung hindurcherstrecken kann. Die Trägerstruktur kann beispielsweise ein Fundament sein. Das Verbindungselement kann beispielsweise ein Fundamentkorbbolzen sein, der vorzugsweise vertikal aus der Trägerstruktur herausragt. Dieses Verbindungselement erstreckt sich durch die zweite Flanschöffnung hindurch. Auf der der Trägerstruktur abgewandten Seite des Flansches ist das Verbindungselement vorzugsweise mit einem weiteren Verbindungselement verbunden, sodass eine feste Verbindung zwischen dem Flansch und der Trägerstruktur gebildet wird. Beispielsweise kann das Verbindungselement als Fundamentkorbbolzen ausgebildet sein und das weitere Verbindungselement als Mutter.

Durch das Hindurchführen des Fundamentkorbbolzens durch die zweite Flanschöffnung und die Sicherung des Fundamentkorbbolzens mit einer Mutter wird eine feste Verbindung des Flansches mit der Trägerstruktur ausgebildet. Durch die Befestigung des Flansches mit dem Turmfußelement mittels des Befestigungselements wird wiederum eine feste Verbindung des Turmfußelements mit der Trägerstruktur erreicht. Insbesondere kann hiermit ein Kraftfluss von dem Turmfußelement über den Flansch in die Trägerstruktur erfolgen.

Das Turmfußelement eines Turms ist in der Regel das Element, insbesondere das Segment, des Turms, das den größten Durchmesser aufweist, Insbesondere bei dem Turmfußelement ist somit die maximale Durchfahrtshöhe von 4,35 m und/oder von 5 m von Brücken, aber auch von kritischen Bereichen in der Fertigung zu berücksichtigen. Allgemein ist es oftmals notwendig, einen bestimmten maximalen Durchmesser nicht zu überschreiten. Durch die im Stand der Technik bekannten angeschweißten Flansche an Türmen, insbesondere an Turmfußelementen, wird der maximale Durchmesser des Turmfußelements vergrößert. Jedoch ist es nicht das Turmfußelement und/oder eine Turmwand, das bzw. die diesen größeren Durchmesser bestimmt, sondern der nach außen ragende Flansch. Folglich beträgt der maximale Durchmesser eines Turmfußelements und/oder einer Turmwand nicht dem maximal möglichen Durchmesser, da der Flansch von dem Turmfußelement und/oder der Turmwand herausragt und somit den Durchmesser des Bauteils bestimmt. Eine Anordnung des Flansches auf der Baustelle ist in der Regel keine Option, da auf der Baustelle nicht die erforderliche Schweißqualität erreicht werden kann bzw. der Aufwand unverhältnismäßig hoch ist.

Der Erfindung liegt die Erkenntnis zugrunde, dass mittels eines angeschraubten Flansches an das Turmfußelement die maximale Ausnutzung eines vorgegebenen Durchmessers durch das Turmfußelement ermöglicht wird. Das Turmfußelement mit angeschraubten Flansch kann also einen größeren Durchmesser aufweisen als vergleichbare Turmfußelemente mit angeschweißtem Flansch. Daraus folgt, dass das Turmfußelement in vielen Fällen nicht segmentiert werden muss. Darüber hinaus verbessert ein solches Turmfußelement die Frequenzlage, die Festigkeit und/oder die Stabilität des Turms. Außerdem kann die Turmfußwand dünner gestaltet werden, da der Durchmesser insgesamt größer wird und so eine bessere Materialausnutzung erreicht werden kann.

Vorzugsweise umfasst das Turmfußelement eine Vielzahl von Gewindeöffnungen, die entlang einer ringförmigen Erstreckung des Turmfußelements angeordnet sind. Analog hierzu weist der Flansch vorzugsweise eine Vielzahl an ersten Flanschöffnungen entlang einer insbesondere ringförmigen Erstreckung auf, sodass vorzugsweise zu jeder der Vielzahl an Gewindeöffnungen jeweils eine erste Flanschöffnung am Flansch vorgesehen ist. Die Gewindeöffnungen und/oder die ersten Flanschöffnungen können jeweils beispielsweise als Lochkreis ausgebildet sein.

Darüber hinaus ist es bevorzugt, dass der Flansch eine Vielzahl an zweiten Flanschöffnungen aufweist, durch die eine Vielzahl von Verbindungselementen der Trägerstruktur hindurchgeführt werden können. In horizontaler Richtung und orthogonal zur Längserstreckung zwischen dem oberen Ende und dem unteren Ende weist das Turmfußelement und/oder der Flansch eine radiale Richtung auf. Die radiale Richtung ist insbesondere zwischen dem Turmfußelement und/oder dem Flansch und einem Mittelpunkt des Turmfußelements und/oder des Flansches horizontal ausgerichtet. In radialer Richtung können die erste Flanschöffnung, die zweite Flanschöffnung und/oder die Gewindeöffnung auf einer radialen Linie liegen. Darüber hinaus kann es bevorzugt sein, dass diese Öffnungen in radialer Richtung versetzt zueinander angeordnet sind.

Gemäß einer bevorzugten Ausführungsvariante des Turmsegments ist vorgesehen, dass die Gewindeöffnung am unteren Ende des Turmfußelements stirnseitig angeordnet ist, und/oder die erste Flanschöffnung am Flansch derart angeordnet ist, dass diese stirnseitig an das untere Ende angrenzt.

Das Turmfußelement weist vorzugsweise am unteren Ende eine Stirnseite auf. An dieser Stirnseite kann die Gewindeöffnung angeordnet sein. Vorzugsweise ist die Stirnseite eine plane Fläche, deren Flächenorthogonale parallel zur Längserstreckung des Turmfußelements zwischen dem oberen Ende und dem unteren Ende ausgerichtet ist. Insbesondere ist es bevorzugt, dass die Stirnseite im Betrieb eine im Wesentlichen horizontale Fläche bildet. Alternativ kann die Gewindeöffnung auch umfangsseitig an dem Turmfußelement angeordnet sein.

Ferner kann die erste Flanschöffnung stirnseitig an das untere Ende angrenzen. Alternativ kann die erste Flanschöffnung auch umfangsseitig an das untere Ende des Turmfußelements angrenzen. Das stirnseitige Angrenzen der ersten Flanschöffnung an das Turmfußelement ermöglicht in Verbindung mit der stirnseitig angeordneten Gewindeöffnung am unteren Ende des Turmfußelements eine sichere Verbindung des Turmfußelements mit dem Flansch mittels des Befestigungselements. Das Befestigungselement kann beispielsweise eine Schraube sein, wobei diese vorzugsweise eine Längsachse aufweist, wobei die Längsachse koaxial zu den Längsachsen der Gewindeöffnung und der ersten Flanschöffnung ist, wobei diese Längsachsen vorzugsweise im Betrieb vertikal und/oder koaxial ausgerichtet sind.

Gemäß einer weiteren bevorzugten Ausführungsvariante des Turmsegments ist vorgesehen, dass das Turmfußelement und/oder der Flansch einen ringförmigen Querschnitt aufweist bzw. aufweisen.

Als Querschnitt ist hier insbesondere die Schnittfläche zu verstehen, dessen Flächenorthogonale im Betrieb im Wesentlichen vertikal und/oder parallel zur Längserstreckung des Turmfußelements und/oder des Flansches ausgerichtet ist. Der ringförmige Querschnitt des Turmfußelements und/oder des Flansches resultiert darin, dass diese eine Außenumfangsfläche und eine Innenumfangsfläche aufweisen. Unter einem ringförmigen Querschnitt sind ferner auch polygonale und/oder ovale Querschnitte zu verstehen.

Darüber hinaus kann das Turmfußelement und/oder der Flansch auch einen teilringförmigen Querschnitt aufweisen. Ein teilringförmiger Querschnitt zeichnet sich insbesondere dadurch aus, dass dieser eine Bogenerstreckung von weniger als 360° aufweist. Beispielsweise kann ein teilringförmiger Querschnitt eine Bogenerstreckung von 180° aufweisen, sodass zwei von diesen aneinander angeordneten teilringförmigen Turmfußelementen und/oder Flanschen einen vollständigen Ring mit einer Bogenerstreckung von 360° ergeben.

In einer weiteren Fortbildung des Turmsegments ist vorgesehen, dass der Flansch eine dritte Flanschöffnung aufweist, und die erste Flanschöffnung in radialer Richtung zwischen der zweiten Flanschöffnung und der dritten Flanschöffnung angeordnet ist, sodass vorzugsweise die zweite Flanschöffnung in radialer Richtung eine geringere Beabstandung zu einem Mittelpunkt des Turmsegments aufweist als die dritte Flanschöffnung in radialer Richtung zu diesem Mittelpunkt, und vorzugsweise die dritte Flanschöffnung derart angeordnet ist, dass sich ein Verbindungselement der Trägerstruktur durch die dritte Flanschöffnung hindurch erstrecken kann.

Mittels der dritten Flanschöffnung kann eine festere Verbindung zwischen dem Flansch und der Trägerstruktur erreicht werden. Darüber hinaus wird die Anzahl der möglichen Verbindungselemente zwischen Flansch und Trägerstruktur erhöht, da die Beabstandung zwischen zweiten Flanschöffnungen nicht beliebig verringert werden kann.

Insbesondere ist es bevorzugt, dass die zweite Flanschöffnung einer Außenumfangsfläche des Turmfußelements zugewandt ist und die dritte Flanschöffnung einer Innenumfangsfläche des Turmfußelements zugewandt ist. Der Mittelpunkt ist insbesondere als geometrischer Schwerpunkt zu verstehen. Bei teilringförmigen Querschnitten des Turmfußelements und/oder des Flansches ist der Mittelpunkt vorzugsweise als der Punkt zu verstehen, der dem geometrischen Schwerpunkt der vollständig zusammengesetzten ringförmigen Geometrie entspricht.

In einer weiteren bevorzugten Fortbildung des Turmsegments ist vorgesehen, dass der Flansch in radialer Richtung eine größere Erstreckung aufweist als das untere Ende des Turmfußelements. Der Flansch erstreckt sich hier insbesondere in radialer Richtung nach innen und nach außen hinweg vom Turmfußelement. Hierdurch wird die Anordnung von zweiten und/oder dritten Flanschöffnungen vereinfacht.

Das Turmsegment wird in einer bevorzugten Fortbildung dahingehend fortgebildet, dass dieses ein am Flansch angeordnetes Lastelement mit einer zweiten Lastelementöffnung umfasst, wobei die zweite Lastelementöffnung eine gemeinsame Durchgangsachse mit der zweiten Flanschöffnung aufweist, und wobei vorzugsweise das Lastelement eine dritte Lastelementöffnung aufweist, die eine gemeinsame Durchgangsachse mit der dritten Flanschöffnung aufweist.

Das Lastelement kann beispielsweise ein Lastring oder ein Lastverteilerring sein. Das Lastelement ist insbesondere auf der Seite des Flansches angeordnet, die dem Turmfußelement abgewandt ist. Das Lastelement weist vorzugsweise die erste Lastelementöffnung auf, wobei diese ferner vorzugsweise eine gemeinsame Längsachse mit der ersten Flanschöffnung und der Gewindeöffnung aufweist. Vorzugsweise ist der Durchmesser und/oder die Erstreckung in horizontaler Richtung, insbesondere orthogonal zur Längserstreckung des Turmfußelements, der ersten Lastelementöffnung größer als der Durchmesser und/oder die Erstreckung der ersten Flanschöffnung.

Die erste Lastelementöffnung kann beispielsweise dafür verwendet werden, dass in dieser ein Schraubenkopf einer Schraube angeordnet ist, die sich durch die erste Flanschöffnung erstreckt und innerhalb der Gewindeöffnung verschraubt ist. Der Schraubenkopf kann sich dann mit seiner Anlagefläche an dem Flansch anlegen, insbesondere auf der Seite des Flansches anlegen, die dem Turmfußelement abgewandt ist. Die Dicke des Lastelements und/oder die Dicke des Schraubenkopfes ist vorzugsweise derart vorgesehen, dass der Schraubenkopf vollständig in der ersten Lastelementöffnung anordenbar ist.

Eine Trägerstruktur, insbesondere ein Fundament, ist in der Regel nicht vollständig horizontal ausbildbar. Das heißt, dass die Trägerstruktur, insbesondere das Fundament, eine geringe Neigung aufweist. Eine derartige Neigung resultiert bei Windenergieanlagen mit ihren beträchtlichen Höhen in einer nicht zu vernachlässigenden Schiefstellung.

Das Lastelement kann zum Ausgleich dieser von der Horizontalen abweichenden Neigung genutzt werden. Hierfür wird das Lastelement auf der Trägerstruktur, insbesondere dem Fundament, angeordnet und mittels geeigneter Ausgleichsmittel, insbesondere Mörtel, so an der Trägerstruktur positioniert, dass die der Trägerstruktur abgewandte Seite des Lastelements, an der der Flansch angeordnet wird, eine im Wesentlichen horizontale Erstreckung ohne wesentliche Neigung aufweist.

Nachdem das Lastelement mit dem Ausgleichsmittel, insbesondere dem Mörtel, an der Trägerstruktur angeordnet ist, kann der Flansch mit dem daran befestigten Turmfußelement an dem Lastelement angeordnet werden. Für diesen Zweck weist das Lastelement die zweite Lastelementöffnung und/oder die dritte Lastelementöffnung auf, durch die sich die Verbindungselemente der Trägerstruktur erstrecken können.

Es kann bevorzugt sein, dass das Lastelement keine erste Lastelementöffnung aufweist. Hierfür kann beispielsweise die Trägerstruktur, insbesondere das Fundament, eine Ausnehmung aufweisen, in der beispielsweise der Schraubenkopf anordenbar ist.

Darüber hinaus ist es bevorzugt, dass das Lastelement ringförmig oder teilringförmig ausgebildet ist, und/oder der Flansch und das Lastelement integral ausgebildet sind. Vorzugsweise weist das Lastelement die gleiche Geometrie wie der Flansch auf. Darüber hinaus kann das Lastelement und/oder der Flansch den gleichen Querschnitt aufweisen wie das Turmfußelement.

In einer weiteren bevorzugten Ausführungsvariante des Turmsegments ist vorgesehen, dass das Befestigungselement als eine Schraube ausgebildet ist, und/oder das Befestigungselement einen Gewindebolzen und eine Mutter aufweist, wobei der Gewindebolzen in die Gewindeöffnung eingeschraubt ist und sich durch die erste Flanschöffnung hindurch erstreckt und auf der dem Turmfußelement abgewandten Seite des Flansches mit der Mutter verschraubt ist, und/oder das Befestigungselement einen Gewindebolzen, einen Querbolzen mit einer Querbolzenöffnung und eine Mutter aufweist, wobei der Gewindebolzen in die Gewindeöffnung eingeschraubt ist und sich durch die erste Flanschöffnung hindurch erstreckt und sich auf der dem Turmfußelement abgewandten Seite des Flansches durch die Querbolzenöffnung erstreckt und mit der Mutter verschraubt ist.

Der Querbolzen weist vorzugsweise zumindest eine Erstreckung auf, die größer ist als die der ersten Flanschöffnung, sodass sich der Querbolzen an der dem Turmfußelement abgewandten Seite des Flansches abstützen kann. Die im Vorherigen genannte Mutter kann auch als Dehnhülse ausgebildet sein. Eine Dehnhülse hat den weiteren Vorteil, dass eine weitere Vorspannung der Verbindung ermöglicht wird.

Gemäß einer weiteren Fortbildung des Turmsegments ist vorgesehen, dass eine Abmessung der ersten Flanschöffnung in radialer Richtung geringer ist als eine Dicke des Turmfußelements in radialer Richtung. Das Turmfußelement steht bei dieser bevorzugten Ausführungsvariante vollständig auf dem Flansch und weist keine Abschnitte auf, die vollständig über der Flanschöffnung angeordnet sind. Hierdurch wird die Stabilität der Anordnung verbessert.

Gemäß einer weiteren bevorzugten Ausführungsvariante ist vorgesehen, dass das Turmfußelement am unteren Ende einen Verdickungsabschnitt aufweist, dessen radiale Erstreckung größer ist als die radiale Erstreckung einer Turmwand, und/oder das obere Ende des Turmfußelements zur Anordnung einer Turmwand ausgebildet ist.

Der Längsquerschnitt des Turmfußelements, dessen Flächenorthogonale im Wesentlichen parallel zu einer Umfangsrichtung des Turmfußelements ausgerichtet ist, weist in dieser bevorzugten Ausführungsvariante vorzugsweise eine flaschenförmige Geometrie auf. Insbesondere zeichnet sich diese dadurch aus, dass das untere Ende eine größere radiale Erstreckung aufweist als eine radiale Erstreckung der Turmwand. Darüber hinaus kann es bevorzugt sein, dass das Turmfußelement am unteren Ende eine größere radiale Erstreckung aufweist als am oberen Ende. Der Verdickungsabschnitt ist insbesondere dafür ausgebildet, dass in diesem die Gewindeöffnung angeordnet ist. Durch die Verdickung in diesem Bereich kann die Festigkeit trotz der Gewindeöffnung, insbesondere einer Vielzahl von Gewindeöffnungen, verbessert werden.

Das obere Ende des Turmfußelements ist insbesondere derart ausgebildet, dass an diesem eine Turmwand angeordnet werden kann. Beispielsweise kann die Turmwand mittels eines Schweißverfahrens angeordnet werden. Das Turmsegment kann außerdem eine Turmwand mit einem ringförmigen Querschnitt umfassen, wobei die Turmwand am oberen Ende des Turmfußelements angeordnet ist und vorzugsweise mit dem Turmfußelement verschweißt ist. Die Turmwand weist vorzugsweise eine geringere radiale Erstreckung auf als das Turmfußelement, insbesondere als der Verdickungsabschnitt des Turmfußelements.

Darüber hinaus ist es bevorzugt, dass die Verbindung des Turmfußelements mit dem Flansch und vorzugsweise des Flansches mit dem Lastelement schweißverbindungsfrei ausgebildet ist. Darüber hinaus kann vorgesehen sein, dass der Flansch als ein segmentierter Flansch ausgebildet ist, und vorzugsweise mindestens zwei horizontal benachbarte Flanschsegmente aufweist.

Gemäß einem weiteren Aspekt wird die eingangs genannte Aufgabe gelöst durch einen Turm, insbesondere Turm einer Windenergieanlage, umfassend mindestens ein Turmsegment gemäß mindestens einer der im Vorherigen beschriebenen Ausführungsvarianten, eine Trägerstruktur, insbesondere ein Fundament, mit mindestens einem ersten Verbindungselement, das vorzugsweise fest mit der Trägerstruktur verbunden ist, wobei sich das erste Verbindungselement durch die zweite Flanschöffnung, und vorzugsweise durch die zweite Lastelementöffnung, erstreckt und vorzugsweise mit einem korrespondierenden zweiten Verbindungselement auf der der Trägerstruktur abgewandten Seite des Flansches derart verbunden ist, dass eine feste Verbindung zwischen dem Flansch und der Trägerstruktur ausgebildet wird.

Das zweite Verbindungselement kann beispielsweise eine Mutter oder eine Dehnhülse sein. Darüber hinaus kann das erste Verbindungselement auch als Schraube ausgebildet sein, wobei die Schraube vorzugsweise zunächst durch die zweite Flanschöffnung geführt ist, vorzugsweise ebenfalls durch die zweite Lastelementöffnung geführt ist, und in der Trägerstruktur verschraubt wird. Hierfür weist die Trägerstruktur vorzugsweise Gewindeöffnungen auf.

Gemäß einer bevorzugten Ausführungsvariante des Turms ist vorgesehen, dass die Trägerstruktur mindestens ein weiteres erstes Verbindungselement aufweist, das vorzugsweise fest mit der Trägerstruktur verbunden ist, wobei sich das weitere erste Verbindungselement durch die dritte Flanschöffnung, und vorzugsweise durch die dritte Lastelementöffnung, erstreckt und mit einem weiteren korrespondierenden zweiten Verbindungselement auf der der Trägerstruktur abgewandten Seite des Flansches derart verbunden ist, dass eine feste Verbindung zwischen dem Flansch und der Trägerstruktur ausgebildet wird.

Gemäß einem weiteren Aspekt wird die eingangs genannte Aufgabe gelöst durch eine Windenergieanlage, umfassend ein Turmsegment gemäß mindestens einer der im Vorherigen beschriebenen Ausführungsvarianten, und/oder einen Turm gemäß mindestens einer der im Vorherigen beschriebenen Ausführungsvarianten.

Gemäß einem weiteren Aspekt wird die eingangs genannte Aufgabe gelöst durch ein Verfahren zum Aufbau eines Turms einer Windenergieanlage, umfassend die Schritte Bereitstellen einer Trägerstruktur, insbesondere eines Fundaments, mit einem ersten Verbindungselement, Anordnen eines Flansches mit einer ersten Flanschöffnung und einer zweiten Flanschöffnung an einem unteren Ende, insbesondere einem stirnseitigen unteren Ende, eines Turmfußelements, das eine Gewindeöffnung aufweist, Befestigen des Flansches an dem unteren Ende, insbesondere dem stirnseitigen unteren Ende, des Turmfußelements durch Anordnen eines Befestigungselements in der Gewindeöffnung und der ersten Flanschöffnung, Anordnen des Flansches auf der Trägerstruktur, sodass sich das erste Verbindungselement durch die zweite Flanschöffnung hindurchstreckt, wobei ein am Flansch angeordnetes Lastelement mit einer ersten Lastelementöffnung vorgesehen ist, wobei das Befestigungselement teilweise innerhalb der ersten Lastelementöffnung angeordnet ist.

In einer bevorzugten Ausführungsvariante des Verfahrens ist vorgesehen, dass dieses die Schritte umfasst: Anordnen eines Lastelements zwischen der Trägerstruktur und dem Flansch mit einer ersten Lastelementöffnung und/oder einer zweiten Lastelementöffnung, Anordnen des Befestigungselements zumindest teilweise innerhalb der ersten Lastelementöffnung und/oder Hindurchführen des ersten Verbindungselements durch die zweite Lastelementöffnung, und vorzugsweise Hindurchführen eines weiteren ersten Verbindungselements der Trägerstruktur durch eine dritte Lastelementöffnung.

Das Verfahren und seine möglichen Fortbildungen weisen Merkmale bzw. Verfahrensschritte auf, die sie insbesondere dafür geeignet machen, für ein Turmsegment und seine Fortbildungen verwendet zu werden. Für weitere Vorteile, Ausführungsvarianten und Ausführungsdetails dieser weiteren Aspekte und ihrer möglichen Fortbildungen wird auch auf die zuvor erfolgte Beschreibung zu den entsprechenden Merkmalen und Fortbildungen des Turmsegments verwiesen.

Bevorzugte Ausführungsbeispiele werden exemplarisch anhand der beiliegenden Figuren erläutert. Es zeigen:
- Figur 1:: eine schematische Darstellung einer Windenergieanlage;
- Figur 2:: eine schematische, zweidimensionale Ansicht eines Turmsegments;
- Figur 3:: eine schematische, zweidimensionale Schnittansicht eines Turmsegments;
- Figur 4:: eine schematische, zweidimensionale Ansicht eines im Stand der Technik bekannten Turmsegments.

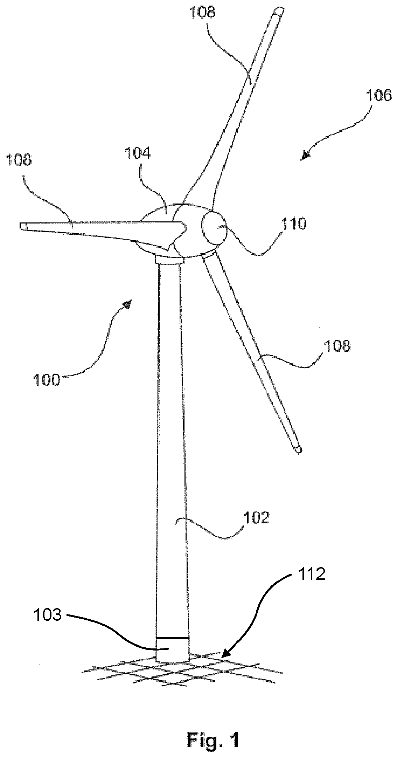

Figur 1 zeigt eine schematische Darstellung einer Windenergieanlage 100. Figur 1 zeigt eine Windenergieanlage 100 mit einem Turm 102 und einer Gondel 104. An der Gondel 104 ist ein Rotor 106 mit drei Rotorblättern 108 und einem Spinner 110 angeordnet. Der Rotor 106 wird im Betrieb durch den Wind in eine Drehbewegung versetzt und treibt dadurch einen Generator in der Gondel 104 an.

An einem Ende des Turms 102, das der Gondel 104 abgewandt ist, weist dieser ein Turmsegment 103 auf. Das Turmsegment 103 weist ein Turmfußelement mit einem oberen Ende, das der Gondel 104 zugewandt ist, und einem unteren Ende, das dem Fundament 112 zugewandt ist, auf. Am unteren Ende des Turmfußelements weist dieses eine Vielzahl von Gewindeöffnungen auf. Zwischen dem Turmfußelement und dem Fundament 112 ist ferner ein Flansch mit einer ersten Flanschöffnung und einer zweiten Flanschöffnung angeordnet.

Das Turmfußelement ist mit dem Flansch mittels eines Befestigungselements verbunden. Hierfür weist das Turmfußelement die Gewindeöffnung und der Flansch die erste Flanschöffnung auf. Das Fundament 112 weist darüber hinaus Verbindungselemente auf, die sich durch die zweiten Flanschöffnungen hindurcherstrecken. Die Verbindungselemente sind derart ausgebildet, dass eine feste Verbindung zwischen dem Flansch und dem Fundament 112 herstellbar ist. Eine am Turm 102 angreifende Kraft oder ein am Turm 102 angreifendes Moment wird somit über das Turmfußelement in den Flansch und von diesem in das Fundament 112 geleitet.

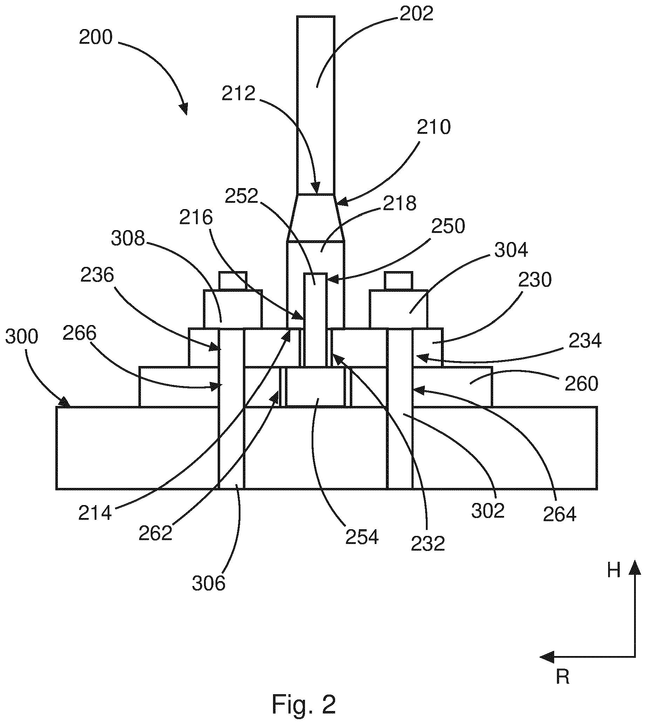

Figur 2 zeigt eine schematische, zweidimensionale Ansicht eines Turmsegments. Das Turmsegment 200 weist ein Turmfußelement 210, einen Flansch 230 und ein Lastelement 260 auf. Das Turmsegment 200 ist auf einem Fundament 300 angeordnet. An einem oberen Ende 212 des Turmfußelements 210 ist eine Turmwand 202 angeordnet.

Das Turmfußelement 210 erstreckt sich in seiner Längsrichtung von dem oberen Ende 212 hin zu dem unteren Ende 214. Die Längserstreckung des Turmfußelements 210 ist im Wesentlichen parallel zu einer Höhe H des Turmsegments 200. Die Höhe H ist im gezeigten Betriebszustand im Wesentlichen vertikal ausgerichtet.

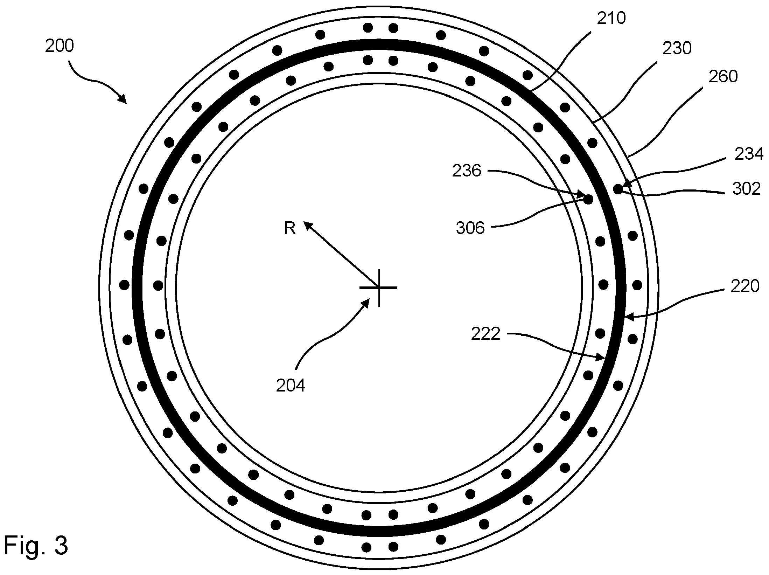

Das Turmsegment 200 ist vorzugsweise ringförmig ausgebildet und weist einen Mittelpunkt auf. Der Mittelpunkt ist hier nicht gezeigt und beispielsweise links im Bild. Die Anordnung des Mittelpunkts ist insbesondere der im Folgenden beschriebenen Figur 3 zu entnehmen. Die Erstreckung von dem Mittelpunkt hin zu dem Turmsegment 200 ist in radialer Richtung R ausgerichtet. Das Turmfußelement 210 weist eine Gewindeöffnung 216 auf. Die Gewindeöffnung 216 ist am unteren Ende 214 des Turmfußelements 210 stirnseitig angeordnet. Das Turmfußelement 210 ist stirnseitig plan ausgebildet. Das Turmfußelement 210 weist ferner in einem Bereich angrenzend an das untere Ende 214 einen Verdickungsabschnitt 218 auf und verjüngt sich vom Verdickungsabschnitt 218 hin zum oberen Ende 212.

Der Flansch 230 ist stirnseitig am unteren Ende 214 des Turmfußelements 210 angeordnet. Der Flansch 230 weist die erste Flanschöffnung 232, die zweite Flanschöffnung 234 und die dritte Flanschöffnung 236 auf. Die erste Flanschöffnung ist bezogen auf die radiale Erstreckung in radialer Richtung R des Flansches 230 im Wesentlichen mittig angeordnet. Die zweite Flanschöffnung 234 weist in radialer Richtung R eine größere Beabstandung von dem Mittelpunkt des Flansches 230 auf als die dritte Flanschöffnung 236. Die dritte Flanschöffnung 236 ist im gezeigten Zustand einer Innenumfangsfläche des Turmfußelements 210 zugewandt. Die zweite Flanschöffnung 234 ist einer Außenumfangsfläche des Turmfußelements 210 zugewandt.

Zwischen dem Flansch 230 und dem Fundament 300 ist das Lastelement 260 angeordnet. In vertikaler Richtung ist das Lastelement 260 zwischen dem Flansch 230 und dem Fundament 300 angeordnet. Das Lastelement 260 weist eine erste Lastelementöffnung 262, eine zweite Lastelementöffnung 264 und eine dritte Lastelementöffnung 266 auf.

Die erste Lastelementöffnung 262 ist bezogen auf die radiale Erstreckung in radialer Richtung R des Lastelements 260 im Wesentlichen mittig angeordnet. Insbesondere ist die erste Lastelementöffnung 262 derart angeordnet, dass diese eine gemeinsame Längsachse mit der ersten Flanschöffnung 232 und der Gewindeöffnung 216 aufweist. Die zweite Lastelementöffnung 264 und die dritte Lastelementöffnung 266 sind in radialer Richtung R beabstandet von der ersten Lastelementöffnung 262. Insbesondere ist die zweite Lastelementöffnung 264 von dem im Vorherigen definierten Mittelpunkt weiter beabstandet als die dritte Lastelementöffnung 266.

Der Flansch 230 ist mit dem Turmfußelement 210 mittels eines als Schraube 250 ausgebildeten Befestigungselements miteinander verbunden. Die Schraube 250 weist einen Schraubenschaft 252 und einen Schraubenkopf 254 auf. Der Schraubenschaft 252 erstreckt sich durch die erste Flanschöffnung 232 und ist in die Gewindeöffnung 216 hineingeschraubt. Der Schraubenkopf ist an einer horizontalen Fläche des Flansches 230, die dem Turmfußelement 210 abgewandt ist, anliegend angeordnet. Somit kann ein Kraftschluss zwischen dem Turmfußelement 210 und dem Flansch 230 bewirkt werden.

Das Fundament 300 weist ein erstes Verbindungselement 302 und ein drittes Verbindungselement 306 auf. Das erste Verbindungselement 302 und das dritte Verbindungselement 306 ragen im Wesentlichen vertikal aus dem Fundament 300 nach oben heraus. Das erste Verbindungselement 302 erstreckt sich durch die zweite Lastelementöffnung 264 und durch die zweite Flanschöffnung 234. Das erste Verbindungselement 302 tritt aus der zweiten Flanschöffnung 234 vertikal heraus. An dieser Stelle ist das erste Verbindungselement 302 mit einem als Mutter ausgebildeten zweiten Verbindungselement 304 gekoppelt. Die Mutter ist auf ein Gewinde am distalen Ende des ersten Verbindungselements 302 aufgeschraubt. Dadurch wird eine feste Verbindung des Flansches 230 über das Lastelement 260 mit dem Fundament 300 ermöglicht.

Analog hierzu erstreckt sich das dritte Verbindungselement 306 durch die dritte Lastelementöffnung 266 und die dritte Flanschöffnung 236 und ist mit einem vierten Verbindungselement 308, vorliegend ebenfalls eine Mutter, gesichert. Der Kraftschluss erfolgt dadurch, dass Kräfte des Turmfußelements 210 auf den Flansch 230 übertragen werden können, insbesondere durch die Schraube 250. Eine Kraft wird vom Flansch wiederum über das Lastelement in das Fundament 300 übertragen, wobei diese Verbindung zwischen Flansch 230, Lastelement 260 und Fundament 300 durch die Verbindungselemente 302, 304, 306, 308 erfolgt.

Figur 3 zeigt eine schematische, zweidimensionale Schnittansicht des Turmsegments 200. Das Turmsegment 200 weist einen Mittelpunkt 204 auf. Das Turmfußelement 210, der Flansch 230 und der Lastring 260 weisen einen im Wesentlichen ringförmigen Querschnitt auf. Das Turmfußelement 210, der Flansch 230 und der Lastring 260 weisen ebenfalls den Mittelpunkt 204 auf. Das Turmfußelement 210 bildet zudem die dem Mittelpunkt 204 zugewandte Innenumfangsfläche 222 und die dem Mittelpunkt abgewandte Außenumfangsfläche 220 aus. Die Höhe H des Turmsegments 200 ist orthogonal zur Zeichenebene ausgerichtet. Der Figur 3 ist insbesondere die Anordnung der ersten Verbindungselemente 302 und der dritten Verbindungselemente 306 sowie der zweiten Flanschöffnung 234 und der dritten Flanschöffnungen 236 zu entnehmen. Die Flanschöffnungen 234, 236 sind als Lochkreis ausgebildet.

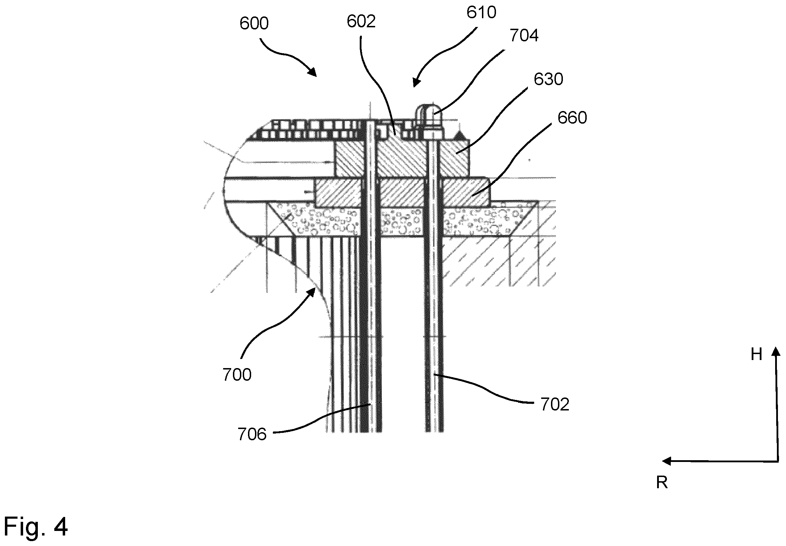

Figur 4 zeigt eine schematische, zweidimensionale Ansicht eines im Stand der Technik bekannten Turmsegments. Das Turmsegment 600 umfasst das Turmfußelement 610, an dem fest ein Flansch 630 angeordnet ist. An einer Unterseite des Flansches 630 ist ein Lastelement 660 angeordnet. Flansch 630 und Lastelement 660 weisen jeweils Durchgangsöffnungen auf, durch die sich Verbindungselemente 702, 706 erstrecken können, wobei diese am Flansch 630 mit weiteren Verbindungselementen 704 gesichert sind. Die Verbindungselemente 702, 706 sind am Fundament 700 befestigt.

Das hier gezeigte Turmsegment 600 hat den Nachteil, dass der Flansch 630 den größten Durchmesser des Turmsegments 600 bestimmt und nicht die Turmwand 602. Dadurch muss die Turmwand 602 im Durchmesser geringer ausgebildet werden, was zu Festigkeits- und/oder Steifigkeitsverlusten führen kann. Alternativ muss das Turmsegment 600 in horizontaler Richtung segmentiert werden.

Das in den Figuren 1, 2 und 3 gezeigte Turmsegment 103, 200 ermöglicht unter anderem eine optimierte Logistik. Insbesondere kann das jeweilige Turmfußelement 210 auf einen maximal transportierbaren Durchmesser, insbesondere 4,30 m, ausgelegt werden. Insbesondere ist bei dieser Abmessung nicht der Durchmesser des Flansches 230 limitierend, da dieser erst an einem Aufstellort der Windenergieanlage 100 an dem Turmfußelement 210 befestigt wird. Das erfindungsgemäße Turmsegment 103, 200 ist somit einfacher und günstiger zu transportieren. Darüber hinaus ermöglicht dies eine bessere festigkeitsbezogene Auslegung eines Windenergieanlagen-Turms 102. Außerdem ist eine kostengünstigere Anbringung eines Windenergieanlagen-Turms 102 an ein Fundament 112, 300 möglich.

### BEZUGSZEICHEN

- 100: Windenergieanlage
- 102: Turm
- 103: Turmsegment
- 104: Gondel
- 106: Rotor
- 108: Rotorblätter
- 110: Spinner
- 112: Fundament
- 200: Turmsegment
- 202: Turmwand
- 204: Mittelpunkt
- 210: Turmfußelement
- 212: oberes Ende
- 214: unteres Ende
- 216: Gewindeöffnung
- 218: Verdickungsabschnitt
- 220: Außenumfangsfläche
- 222: Innenumfangsfläche
- 230: Flansch
- 232: erste Flanschöffnung
- 234: zweite Flanschöffnung
- 236: dritte Flanschöffnung
- 250: Schraube
- 252: Schraubenschaft
- 254: Schraubenkopf
- 260: Lastelement
- 262: erste Lastelementöffnung
- 264: zweite Lastelementöffnung
- 266: dritte Lastelementöffnung
- 300: Fundament
- 302: erstes Verbindungselement
- 304: zweites Verbindungselement
- 306: drittes Verbindungselement
- 308: viertes Verbindungselement
- 600: Turmsegment
- 602: Turmwand
- 610: Turmfußelement
- 630: Flansch
- 660: Lastelement
- 700: Fundament
- 702: erstes Verbindungselement
- 704: zweites Verbindungselement
- 706: drittes Verbindungselement
- H: Höhe
- R: radiale Richtung

## Patentansprüche

1. Turmsegment (103, 200) für einen Turm (102) einer Windenergieanlage (100) zur Anbindung an eine Trägerstruktur, insbesondere an ein Fundament, umfassend
- ein Turmfußelement (210) mit
∘ einem oberen Ende (212) und einem unteren Ende (214), und
∘ einer am unteren Ende (214) angeordneten Gewindeöffnung (216),
- einen am unteren Ende (214) angeordneten Flansch (230) mit einer ersten Flanschöffnung (232) und einer zweiten Flanschöffnung (234),
- wobei das Turmfußelement (210) und der Flansch (230) mit einem in der Gewindeöffnung (216) und der ersten Flanschöffnung (232) angeordneten Befestigungselement (250) verbunden sind, und
- wobei die zweite Flanschöffnung (234) derart ausgebildet ist, dass sich ein Verbindungselement der Trägerstruktur durch die zweite Flanschöffnung (234) hindurch erstrecken kann, und
- ein am Flansch (230) angeordnetes Lastelement (260) mit einer ersten Lastelementöffnung (262), wobei das Befestigungselement (250) teilweise innerhalb der ersten Lastelementöffnung (262) angeordnet ist.

2. Turmsegment (103, 200) gemäß Anspruch 1, wobei
- die Gewindeöffnung (216) am unteren Ende (214) des Turmfußelements (210) stirnseitig angeordnet ist, und/oder
- die erste Flanschöffnung (232) am Flansch (230) derart angeordnet ist, dass diese stirnseitig an das untere Ende (214) angrenzt.

3. Turmsegment (103, 200) gemäß mindestens einem der vorherigen Ansprüche, wobei
- das Turmfußelement (210) und/oder der Flansch (230) einen ringförmigen Querschnitt aufweist bzw. aufweisen.

4. Turmsegment (103, 200) gemäß mindestens einem der vorherigen Ansprüche, wobei
- der Flansch (230) eine dritte Flanschöffnung (236) aufweist, und
- die erste Flanschöffnung (232) in radialer Richtung (R) zwischen der zweiten Flanschöffnung (234) und der dritten Flanschöffnung (236) angeordnet ist, sodass vorzugsweise die zweite Flanschöffnung (234) in radialer Richtung (R) eine geringere Beabstandung zu einem Mittelpunkt (204) des Turmsegments (103, 200) aufweist als die dritte Flanschöffnung (236) in radialer Richtung (R) zu diesem Mittelpunkt (204), und
- vorzugsweise die dritte Flanschöffnung (236) derart angeordnet ist, dass sich ein Verbindungselement der Trägerstruktur durch die dritte Flanschöffnung (236) hindurch erstrecken kann.

5. Turmsegment (103, 200) gemäß mindestens einem der vorherigen Ansprüche, umfassend
- ein am Flansch (230) angeordnetes Lastelement (260) mit einer zweiten Lastelementöffnung (264),
- wobei die zweite Lastelementöffnung (264) eine gemeinsame Durchgangsachse mit der zweiten Flanschöffnung (234) aufweist, und
- wobei vorzugsweise das Lastelement (260) eine dritte Lastelementöffnung (266) aufweist, die eine gemeinsame Durchgangsachse mit der dritten Flanschöffnung (236) aufweist.

6. Turmsegment (103, 200) gemäß mindestens einem der vorherigen Ansprüche, wobei
- das Lastelement (260) ringförmig oder teilringförmig ausgebildet ist, und/oder
- der Flansch (230) und das Lastelement (260) integral ausgebildet sind.

7. Turmsegment (103, 200) gemäß mindestens einem der vorherigen Ansprüche, wobei
- das Befestigungselement (250) als eine Schraube ausgebildet ist, und/oder
- das Befestigungselement (250) einen Gewindebolzen und eine Mutter aufweist, wobei der Gewindebolzen in die Gewindeöffnung (216) eingeschraubt ist und sich durch die erste Flanschöffnung (232) hindurch erstreckt und auf der dem Turmfußelement (210) abgewandten Seite des Flansches (230) mit der Mutter verschraubt ist, und/oder
- das Befestigungselement (250) einen Gewindebolzen, einen Querbolzen mit einer Querbolzenöffnung und eine Mutter aufweist, wobei der Gewindebolzen in die Gewindeöffnung (216) eingeschraubt ist und sich durch die erste Flanschöffnung (232) hindurch erstreckt und sich auf der dem Turmfußelement (210) abgewandten Seite des Flansches (230) durch die Querbolzenöffnung erstreckt und mit der Mutter verschraubt ist.

8. Turmsegment (103, 200) gemäß mindestens einem der vorherigen Ansprüche, wobei
- eine Abmessung der ersten Flanschöffnung (232) in radialer Richtung (R) geringer ist als eine Dicke des Turmfußelements (210) in radialer Richtung (R).

9. Turmsegment (103, 200) gemäß mindestens einem der vorherigen Ansprüche, wobei
- das Turmfußelement (210) am unteren Ende (214) einen Verdickungsabschnitt (218) aufweist, dessen radiale Erstreckung größer ist als die radiale Erstreckung einer Turmwand (202), und/oder
- das obere Ende (212) des Turmfußelements (210) zur Anordnung einer Turmwand (202) ausgebildet ist.

10. Turmsegment (103, 200) gemäß mindestens einem der vorherigen Ansprüche, umfassend
- eine Turmwand (202) mit einem ringförmigen Querschnitt, wobei die Turmwand (202) am oberen Ende (212) des Turmfußelements (210) angeordnet ist und vorzugsweise mit dem Turmfußelement (210) verschweißt ist, und/oder
- die Turmwand (202) eine geringere radiale Erstreckung aufweist als das Turmfußelement (210), insbesondere als der Verdickungsabschnitt (218) des Turmfußelements (210).

11. Turmsegment (103, 200) gemäß mindestens einem der vorherigen Ansprüche, wobei
- die Verbindung des Turmfußelements (210) mit dem Flansch (230) und vorzugsweise des Flansches (230) mit dem Lastelement (260) schweißverbindungsfrei ausgebildet ist.

12. Turmsegment (103, 200) gemäß mindestens einem der vorherigen Ansprüche, wobei
- der Flansch (230) als ein segmentierter Flansch (230) ausgebildet ist, und vorzugsweise mindestens zwei horizontal benachbarte Flanschsegmente aufweist.

13. Turm (102) einer Windenergieanlage (100), umfassend
- mindestens ein Turmsegment gemäß mindestens einem der Ansprüche 1-12,
- eine Trägerstruktur (112, 300), insbesondere ein Fundament, mit mindestens einem ersten Verbindungselement, das vorzugsweise fest mit der Trägerstruktur (112, 300) verbunden ist,
- wobei sich das erste Verbindungselement durch die zweite Flanschöffnung (234), und vorzugsweise durch die zweite Lastelementöffnung (264), erstreckt und
- vorzugsweise mit einem korrespondierenden zweiten Verbindungselement auf der der Trägerstruktur (112, 300) abgewandten Seite des Flansches (230) derart verbunden ist, dass eine feste Verbindung zwischen dem Flansch (230) und der Trägerstruktur (112, 300) ausgebildet wird.

14. Turm (102) gemäß dem vorherigen Anspruch 13,
- wobei die Trägerstruktur (112, 300) mindestens ein weiteres erstes Verbindungselement aufweist, das vorzugsweise fest mit der Trägerstruktur (112, 300) verbunden ist,
- wobei sich das weitere erste Verbindungselement durch die dritte Flanschöffnung (236), und vorzugsweise durch die dritte Lastelementöffnung (266), erstreckt und mit einem weiteren korrespondierenden zweiten Verbindungselement auf der der Trägerstruktur (112, 300) abgewandten Seite des Flansches (230) derart verbunden ist, dass eine feste Verbindung zwischen dem Flansch (230) und der Trägerstruktur (112, 300) ausgebildet wird.

15. Windenergieanlage (100), umfassend
- ein Turmsegment (103, 200) gemäß mindestens einem der Ansprüche 1-12, und/oder
- einen Turm (102) gemäß mindestens einem der Ansprüche 13-14.

16. Verfahren zum Aufbau eines Turms (102) einer Windenergieanlage (100), umfassend die Schritte
- Bereitstellen einer Trägerstruktur (112, 300), insbesondere eines Fundaments, mit einem ersten Verbindungselement (302, 304),
- Anordnen eines Flansches (230) mit einer ersten Flanschöffnung (232) und einer zweiten Flanschöffnung (234) an einem unteren Ende (214), insbesondere einem stirnseitigen unteren Ende (214), eines Turmfußelements (210), das eine Gewindeöffnung (216) aufweist,
- Befestigen des Flansches (230) an dem unteren Ende (214), insbesondere dem stirnseitigen unteren Ende (214), des Turmfußelements (210) durch Anordnen eines Befestigungselements (250) in der Gewindeöffnung (216) und der ersten Flanschöffnung (232),
- Anordnen des Flansches (230) auf der Trägerstruktur (112, 300), sodass sich das erste Verbindungselement (302, 306) durch die zweite Flanschöffnung (234) hindurchstreckt, wobei
- ein am Flansch (230) angeordnetes Lastelement (260) mit einer ersten Lastelementöffnung (262), wobei das Befestigungselement (250) teilweise innerhalb der ersten Lastelementöffnung (262) angeordnet ist.

17. Verfahren nach dem vorherigen Anspruch 16, umfassend die Schritte
- Anordnen eines Lastelements (260) zwischen der Trägerstruktur (112, 300) und dem Flansch (230) mit einer ersten Lastelementöffnung (262) und/oder einer zweiten Lastelementöffnung (264),
- Anordnen des Befestigungselements (250) zumindest teilweise innerhalb der ersten Lastelementöffnung (262) und/oder Hindurchführen des ersten Verbindungselements (302, 306) durch die zweite Lastelementöffnung (264), und
- vorzugsweise Hindurchführen eines weiteren ersten Verbindungselements (302, 306) der Trägerstruktur (112, 300) durch eine dritte Lastelementöffnung (266) des Lastelements (260).

## Claims

1. A tower segment (103, 200) for a tower (102) of a wind power installation (100), for attaching to a support structure, in particular to a foundation, comprising
- a tower base element (210) having
∘ an upper end (212) and a lower end (214), and
∘ a threaded opening (216) arranged at the lower end (214),
- a flange (230), which is arranged at the lower end (214), having a first flange opening (232) and a second flange opening (234),
- wherein the tower base element (210) and the flange (230) are connected by a fastening element (250) arranged in the threaded opening (216) and the first flange opening (232), and
- wherein the second flange opening (234) is formed in such a way that a connecting element of the support structure can extend through the second flange opening (234), and
- a load element (260), which is arranged on the flange (230), having a first load element opening (262), wherein the fastening element (250) is partially arranged within the first load element opening (262).

2. The tower segment (103, 200) as claimed in claim 1, wherein
- the threaded opening (216) is arranged terminally at the lower end (214) of the tower base element (210), and/or
- the first flange opening (232) is arranged on the flange (230) in such a way that it terminally adjoins the lower end (214).

3. The tower segment (103, 200) as claimed in at least one of the preceding claims,
wherein
- the tower base element (210) and/or the flange (230) have or has an annular cross section.

4. The tower segment (103, 200) as claimed in at least one of the preceding claims,
wherein
- the flange (230) has a third flange opening (236), and
- the first flange opening (232) is arranged in the radial direction (R) between the second flange opening (234) and the third flange opening (236) such that preferably the second flange opening (234) has in the radial direction (R) a smaller spacing from a centerpoint (204) of the tower segment (103, 200) than the third flange opening (236) in the radial direction (R) from this centerpoint (204), and
- the third flange opening (236) is preferably arranged in such a way that a connecting element of the support structure can extend through the third flange opening (236).

5. The tower segment (103, 200) as claimed in at least one of the preceding claims, comprising
- a load element (260), which is arranged on the flange (230), having a second load element opening (264),
- wherein the second load element opening (264) has a common through-passage axis with the second flange opening (234), and
- wherein preferably the load element (260) has a third load element opening (266) which has a common through-passage axis with the third flange opening (236).

6. The tower segment (103, 200) as claimed in at least one of the preceding claims,
wherein
- the load element (260) is annular or partly annular in form, and/or
- the flange (230) and the load element (260) are formed integrally.

7. The tower segment (103, 200) as claimed in at least one of the preceding claims,
wherein
- the fastening element (250) takes the form of a screw, and/or
- the fastening element (250) has a threaded bolt and a nut, wherein the threaded bolt is screwed into the threaded opening (216) and extends through the first flange opening (232) and is screwed to the nut on the side of the flange (230) that faces away from the tower base element (210), and/or
- the fastening element (250) has a threaded bolt, a cross bolt, with a cross bolt opening, and a nut, wherein the threaded bolt is screwed into the threaded opening (216) and extends through the first flange opening (232) and, on the side of the flange (230) that faces away from the tower base element (210), extends through the cross bolt opening and is screwed to the nut.

8. The tower segment (103, 200) as claimed in at least one of the preceding claims,
wherein
- a dimension of the first flange opening (232) in the radial direction (R) is smaller than a thickness of the tower base element (210) in the radial direction (R).

9. The tower segment (103, 200) as claimed in at least one of the preceding claims,
wherein
- the tower base element (210) has at the lower end (214) a thickened portion (218) whose radial extent is greater than the radial extent of a tower wall (202), and/or
- the upper end (212) of the tower base element (210) is designed for arranging a tower wall (202).

10. The tower segment (103, 200) as claimed in at least one of the preceding claims, comprising
- a tower wall (202) having an annular cross section, wherein the tower wall (202) is arranged at the upper end (212) of the tower base element (210) and is preferably welded to the tower base element (210), and/or
- the tower wall (202) has a smaller radial extent than the tower base element (210), in particular than the thickened portion (218) of the tower base element (210).

11. The tower segment (103, 200) as claimed in at least one of the preceding claims,
wherein
- the connection of the tower base element (210) to the flange (230) and preferably of the flange (230) to the load element (260) is designed to be free of a welded connection.

12. The tower segment (103, 200) as claimed in at least one of the preceding claims,
wherein
- the flange (230) takes the form of a segmented flange (230) and preferably has at least two horizontally adjacent flange segments.

13. A tower (102) of a wind power installation (100), comprising
- at least one tower segment as claimed in at least one of claims 1-12,
- a support structure (112, 300), in particular a foundation, having at least one first connecting element which is preferably fixedly connected to the support structure (112, 300),
- wherein the first connecting element extends through the second flange opening (234), and preferably through the second load element opening (264), and
- is preferably connected to a corresponding second connecting element on the side of the flange (230) that faces away from the support structure (112, 300) in such a way that a fixed connection is formed between the flange (230) and the support structure (112, 300).

14. The tower (102) as claimed in the preceding claim 13,
- wherein the support structure (112, 300) has at least one further first connecting element which is preferably fixedly connected to the support structure (112, 300),
- wherein the further first connecting element extends through the third flange opening (236), and preferably through the third load element opening (266), and is connected to a further corresponding second connecting element on the side of the flange (230) that faces away from the support structure (112, 300) in such a way that a fixed connection is formed between the flange (230) and the support structure (112, 300).

15. A wind power installation (100), comprising
- a tower segment (103, 200) as claimed in at least one of claims 1-12, and/or
- a tower (102) as claimed in at least one of claims 13-14.

16. A method for constructing a tower (102) of a wind power installation (100), comprising the following steps:
- providing a support structure (112, 300), in particular a foundation, having a first connecting element (302, 304),
- arranging a flange (230) having a first flange opening (232) and a second flange opening (234) at a lower end (214), in particular a terminal lower end (214), of a tower base element (210) which has a threaded opening (216),
- fastening the flange (230) to the lower end (214), in particular the terminal lower end (214), of the tower base element (210) by arranging a fastening element (250) in the threaded opening (216) and the first flange opening (232),
- arranging the flange (230) on the support structure (112, 300) such that the first connecting element (302, 306) extends through the second flange opening (234), wherein
- a load element (260), which is arranged on the flange (230), having a first load element opening (262), wherein the fastening element (250) is partially arranged within the first load element opening (262).

17. The method as claimed in the preceding claim 16, comprising the following steps:
- arranging a load element (260) between the support structure (112, 300) and the flange (230) having a first load element opening (262) and/or a second load element opening (264),
- arranging the fastening element (250) at least partially within the first load element opening (262) and/or guiding the first connecting element (302, 306) through the second load element opening (264), and
- preferably guiding a further first connecting element (302, 306) of the support structure (112, 300) through a third load element opening (266) of the load element (260).

## Revendications

1. Segment de tour (103, 200) pour une tour (102) d'une éolienne (100) pour le raccordement à une structure de support, en particulier à une base, comprenant
- un élément de pied de tour (210) avec
o une extrémité supérieure (212) et une extrémité inférieure (214), et
o une ouverture filetée (216) disposée sur l'extrémité inférieure (214),
- une bride (230) disposée sur l'extrémité inférieure (214) avec une première ouverture de bride (232) et une deuxième ouverture de bride (234),
- dans lequel l'élément de pied de tour (210) et la bride (230) sont reliés à un élément de fixation (250) disposé dans l'ouverture filetée (216) et la première ouverture de bride (232), et
- dans lequel la deuxième ouverture de bride (234) est réalisée de telle sorte qu'un élément de liaison de la structure de support peut s'étendre à travers la deuxième ouverture de bride (234), et
- un élément de charge (260) disposé sur la bride (230) avec une première ouverture d'élément de charge (262), dans lequel l'élément de fixation (250) est disposé en partie à l'intérieur de la première ouverture d'élément de charge (262).

2. Segment de tour (103, 200) selon la revendication 1, dans lequel
- l'ouverture filetée (216) est disposée frontalement sur l'extrémité inférieure (214) de l'élément de pied de tour (210), et/ou
- la première ouverture de bride (232) est disposée sur la bride (230), de telle sorte que celle-ci est frontalement adjacente à l'extrémité inférieure (214).

3. Segment de tour (103, 200) selon au moins l'une des revendications précédentes, dans lequel
- l'élément de pied de tour (210) et/ou la bride (230) présente ou présentent une section transversale annulaire.

4. Segment de tour (103, 200) selon au moins l'une des revendications précédentes, dans lequel
- la bride (230) présente une troisième ouverture de bride (236), et
- la première ouverture de bride (232) est disposée dans la direction radiale (R) entre la deuxième ouverture de bride (234) et la troisième ouverture de bride (236), de sorte que de préférence la deuxième ouverture de bride (234) présente, dans la direction radiale (R), un espacement, par rapport à un centre (204) du segment de tour (103, 200), plus petit que la troisième ouverture de bride (236) dans la direction radiale (R) par rapport à ce centre (204), et
- de préférence la troisième ouverture de bride (236) est disposée de telle sorte qu'un élément de liaison de la structure de support peut s'étendre à travers la troisième ouverture de bride (236).

5. Segment de tour (103, 200) selon au moins l'une des revendications précédentes, comprenant
- un élément de charge (260) disposé sur la bride (230) avec une deuxième ouverture d'élément de charge (264),
- dans lequel la deuxième ouverture d'élément de charge (264) présente un axe de passage commun avec la deuxième ouverture de bride (234), et
- dans lequel de préférence l'élément de charge (260) présente une troisième ouverture d'élément de charge (266), qui présente un axe de passage commun avec la troisième ouverture de bride (236).

6. Segment de tour (103, 200) selon au moins l'une des revendications précédentes, dans lequel
- l'élément de charge (260) est réalisé de manière annulaire ou en partie de manière annulaire, et/ou
- la bride (230) et l'élément de charge (260) sont réalisés d'un seul tenant.

7. Segment de tour (103, 200) selon au moins l'une des revendications précédentes, dans lequel
- l'élément de fixation (250) est réalisé en tant que vis, et/ou
- l'élément de fixation (250) présente un boulon fileté et un écrou, dans lequel le boulon fileté est vissé dans l'ouverture filetée (216) et s'étend à travers la première ouverture de bride (232) et est vissé à l'écrou sur la face de la bride (230) opposée à l'élément de pied de tour (210), et/ou
- l'élément de fixation (250) présente un boulon fileté, un boulon transversal avec une ouverture de boulon transversal et un écrou, dans lequel le boulon fileté est vissé dans l'ouverture filetée (216) et s'étend à travers la première ouverture de bride (232) et s'étend sur la face de la bride (230) opposée à l'élément de pied de tour (210) à travers l'ouverture de boulon transversal et est vissé à l'écrou.

8. Segment de tour (103, 200) selon au moins l'une des revendications précédentes, dans lequel
- une dimension de la première ouverture de bride (232) en direction radiale (R) est plus petite qu'une épaisseur de l'élément de pied de tour (210) en direction radiale (R).

9. Segment de tour (103, 200) selon au moins l'une des revendications précédentes, dans lequel
- l'élément de pied de tour (210) présente, sur l'extrémité inférieure (214), une partie d'épaississement (218), dont l'étendue radiale est plus grande que l'étendue radiale d'une paroi de tour (202), et/ou
- l'extrémité supérieure (212) de l'élément de pied de tour (210) est réalisée pour la disposition d'une paroi de tour (202).

10. Segment de tour (103, 200) selon au moins l'une des revendications précédentes, comprenant
- une paroi de tour (202) avec une section transversale annulaire, dans lequel la paroi de tour (202) est disposée sur l'extrémité supérieure (212) de l'élément de pied de tour (210) et de préférence est soudée à l'élément de pied de tour (210), et/ou
- la paroi de tour (202) présente une étendue radiale plus petite que l'élément de pied de tour (210), en particulier que la partie d'épaississement (218) de l'élément de pied de tour (210).

11. Segment de tour (103, 200) selon au moins l'une des revendications précédentes, dans lequel
- la liaison de l'élément de pied de tour (210) à la bride (230), et de préférence de la bride (230) à l'élément de charge (260), est réalisée sans liaison de soudage.

12. Segment de tour (103, 200) selon au moins l'une des revendications précédentes, dans lequel
- la bride (230) est réalisée en tant que bride (230) segmentée, et de préférence présente au moins deux segments de bride voisins horizontalement.

13. Tour (102) d'une éolienne (100), comprenant
- au moins un segment de tour selon au moins l'une des revendications 1-12,
- une structure de support (112, 300), en particulier une base, avec au moins un premier élément de liaison, qui est relié de préférence fixement à la structure de support (112, 300),
- dans laquelle le premier élément de liaison s'étend à travers la deuxième ouverture de bride (234), et de préférence à travers la deuxième ouverture d'élément de charge (264), et
- de préférence est relié à un deuxième élément de liaison correspondant sur la face de la bride (230) opposée à la structure de support (112, 300), de telle sorte qu'une liaison fixe est réalisée entre la bride (230) et la structure de support (112, 300).

14. Tour (102) selon la revendication précédente 13,
- dans laquelle la structure de support (112, 300) présente au moins un autre premier élément de liaison, qui est relié de préférence fixement à la structure de support (112, 300),
- dans laquelle l'autre premier élément de liaison s'étend à travers la troisième ouverture de bride (236), et de préférence à travers la troisième ouverture d'élément de charge (266), et est relié à un autre deuxième élément de liaison correspondant sur la face de la bride (230) opposée à la structure de support (112, 300), de telle sorte qu'une liaison fixe entre la bride (230) et la structure de support (112, 300) est réalisée.

15. Eolienne (100), comprenant
- un segment de tour (103, 200) selon au moins l'une des revendications 1-12, et/ou
- une tour (102) selon au moins l'une des revendications 13-14.

16. Procédé pour la construction d'une tour (102) d'une éolienne (100), comprenant les étapes de
- fourniture d'une structure de support (112, 300), en particulier d'une base, avec un premier élément de liaison (302, 304),
- disposition d'une bride (230) avec une première ouverture de bride (232) et une deuxième ouverture de bride (234) sur une extrémité inférieure (214), en particulier une extrémité inférieure (214) frontale, d'un élément de pied de tour (210), qui présente une ouverture filetée (216),
- fixation de la bride (230) sur l'extrémité inférieure (214), en particulier l'extrémité inférieure (214) frontale, de l'élément de pied de tour (210) par disposition d'un élément de fixation (250) dans l'ouverture filetée (216) et la première ouverture de bride (232),
- disposition de la bride (230) sur la structure de support (112, 300), de sorte que le premier élément de liaison (302, 306) s'étend à travers la deuxième ouverture de bride (234), dans lequel
- un élément de charge (260) disposé sur la bride (230) avec une première ouverture d'élément de charge (262), dans lequel l'élément de fixation (250) est disposé en partie à l'intérieur de la première ouverture d'élément de charge (262).

17. Procédé selon la revendication précédente 16, comprenant les étapes de
- disposition d'un élément de charge (260) entre la structure de support (112, 300) et la bride (230) avec une première ouverture d'élément de charge (262) et/ou une deuxième ouverture d'élément de charge (264),
- disposition de l'élément de fixation (250) au moins en partie à l'intérieur de la première ouverture d'élément de charge (262) et/ou guidage du premier élément de liaison (302, 306) à travers la deuxième ouverture d'élément de charge (264), et
- de préférence guidage d'un autre premier élément de liaison (302, 306) de la structure de support (112, 300) à travers une troisième ouverture d'élément de charge (266) de l'élément de charge (260).
